# EUROPEAN PATENT APPLICATION

(11) **EP 4 763 927 A1**
(43) Date of publication of application: **24.06.2026**
(21) Application number: 24223116.5
(22) Date of filing: 23.12.2024
(51) Int. Cl.: C09D 11/38, C09D 11/36

(54) **INK COMPOSITIONS FOR CONTINUOUS JET PRINTING, ESPECIALLY ON MINERAL OXIDE SURFACES**

(71) Applicant: Dover Europe Sàrl, 1214 Vernier (CH)
(72) Inventor: SABYS, Jean-Yves, 26600 LA ROCHE DE GLUN (FR); RACINE, Hélène, 26800 BEAUVALLON (FR); GAGLIARDI, César, 1700 FRIBOURG (CH); FALCO, Guillaume, VEVEY (CH)
(74) Representative: Regimbeau

(57) **Abstract**

The present disclosure relates to an ink composition for marking supports, substrates and objects of all types, especially made of glass, made of ceramic or combination thereof, the properties of which are particularly suitable for liquid jet printing or marking and very particularly for the continuous deflected inkjet marking of a very large variety of supports.

## Description

### FIELD OF THE INVENTION

The invention relates to an ink composition for marking mineral oxides supports, substrates and objects of all types, for example made of glass, ceramic, or combination thereof, the properties of which are particularly suitable for liquid jet printing or marking and very particularly for the continuous deflected inkjet marking of a very large variety of supports.

### BACKGROUND OF THE INVENTION

Glass packaging is commonly used in the food, beverage and personal care industries. Glass bottles and containers offer superior products protection and taste preservation as well as recyclability, therefore responding to the rising demand for recycled (reusable or returnable) glass to save resources and energy for new glass manufacturing.

The traceability of products, and especially of food and beverage products, requires the marking of varying information on the packaging of these products, such as expiration dates, lot numbers.

Inkjet printing, in particular continuous deflected inkjet technology is, with CO₂ laser marking, the most suitable technique for the high-speed marking of varying information on these surfaces.

In many countries, glass bottles, in particular glass bottles containing drinks such as carbonated drinks, for instance sodas, are returned, washed in alkaline solutions and refilled after washing. The particular case of marking returnable glass bottles, such as bottles for containing sodas, fruit juices and drinks in general, is challenging. The marking needs to provide legible and clear marking whatever the environmental conditions in which the marking occurs (e.g. temperature, humidity), has to be resistant to removal when the bottles are subjected to handling, to immersion in cold water (if the product is chilled) or storing for long periods of time and it needs to be readily removed when the bottles are washed.

This marking is particularly difficult in the case of bottles containing carbonated drinks, such as sodas, which are filled at low temperature, and this marking is even more difficult when it is carried out in surroundings which may be as humid and hot as those of the countries where the temperature is, for example, 35°C, with, for example, 99% relative humidity. Typically, the new or previously washed bottles are filled with the liquid at the lowest possible temperature (for example in the vicinity of 4°C) to avoid the evaporation of the carbon dioxide from these drinks. In humid and hot surroundings, condensation occurs immediately on the outside of the bottles. In order to guarantee the traceability of the production, these bottles are preferably marked on the neck, with corresponding information, immediately after filling.

Hence, an ink composition used for such marking, and also the marking obtained by deposition of this ink composition, shall in particular exhibit the following properties:
- the ink must adhere and dry very rapidly on a surface that may be wet, cold and in many cases on which the ambient humidity condenses very considerably. The ink must dry as rapidly as possible in order to be able to withstand handling from only a few seconds to a few minutes after the marking operation;
- the marking obtained by deposition of the ink must withstand handling by the consumer after cooling in a refrigerator or a tub of cold or even iced water as long as necessary;
- the marking must be erased or removed during the alkaline washing operation. For obvious ecological reasons, this alkaline washing operation must be carried out at as low a pH as possible.

Finally, these properties must remain constant over the entire shelf life of the ink, generally given as 6 to 18 months, and also in the printer at the site of use, under the same humidity and temperature conditions.

In addition, the ink compositions that are to be sprayed, jetted, particularly in the continuous deflected inkjet printing technique, have to satisfy a number of criteria inherent to the marking technique. These are related to, among other factors, the viscosity, solubility in a solvent, compatibility of ingredients, etc., and electric conductivity in the case of the continuous deflected, deviated, continuous inkjet printing technique. Furthermore, these ink compositions must dry quickly, be capable of flowing or remaining motionless close to the nozzle of the printing head without clogging it, with good stability of the jet orientation to enable easy cleaning of the printing head.

Ingredients of inks currently used in the continuous deflected, deviated, inkjet printing technique, are organic or inorganic, mineral products; they are colouring materials such as dyes or pigments, resins or binders, in one or several more or less volatile organic solvent compound(s) or in water, optionally one or several salt(s) imparting conductivity (commonly called conductivity salts), as well as various additives, such as surface tension modifiers, surface active agents, plasticizers or tackifiers.

Regulations for indirect food contact materials becoming more and more stringent worldwide, there is a continuous need for providing new ink compositions, suitable in particular for continuous deflected jet printing, especially onto substrates such as glass or plastic bottles, that meet the above criteria.

The objective of the invention is therefore to provide an ink composition, suitable in particular for continuous deflected jet printing, which satisfies the criteria and requirements mentioned above including in particular ink properties stability over ink lifetime and washability, and which is advantageously suitable for indirect food contact, thus preferably containing no carcinogenic, mutagenic, reprotoxic component(s), or component(s) toxic to the environment.

### SUMMARY OF THE INVENTION

The present invention relates to an ink composition for liquid jet printing and a process for its preparation. The ink composition comprises:
(a) a solvent;
(b) a binder comprising one or more polymeric compound(s); and
(c) one or more colorant material(s);
wherein the ink composition further comprises 3% or more, preferably from 3 to 10%, by weight of an alkenylalkoxysilane relative to the total weight of the composition.

The present invention further relates to a use of an alkenylalkoxysilane, in particular as defined below, in an ink composition for liquid jet printings, in particular for continuous deflected ink jet ("CIJ") printing technique, to improve the balance between water immersion resistance of printed ink on a glass surface and stability of the ink composition over time.

The present invention further relates to a process for preparing the ink composition as described herein comprising the steps of mixing (a) a solvent, (b) a binder comprising one or more polymeric compound(s); and (c) one or more colorant material(s), the solvent, binder and colorant material(s) being as described herein.

The present invention further relates to a support, substrate or object by liquid printing technique, in particular by continuous deflected ink jet printing technique, the process comprising the step of spraying an ink composition onto the support, substrate or object, wherein the ink composition is as defined herein.

Further aspects of the invention are as disclosed herein and in the claims.

### DESCRIPTION OF THE INVENTION

The inventors have developed an ink composition that satisfies the above-mentioned criteria and requirements. It has been unexpectedly found that the use of a alkenylalkoxysilane in an ink composition, particularly suitable for continuous deflected ink jet printing technique (known as "CIJ") or for super piezo inkjet printing technique (known as "SPI") allows to improve the balance between water immersion resistance of the printed ink on a glass surface and stability of the ink composition over time, e.g. over ink shelf-life, in particular relative to a composition comprising alkoxysilanes not comprising any alkenylsilyl group as described below. Alkoxysilanes are typically used in ink compositions for marking returnable glass bottles to provide adhesion on wet substrates (WO2010/103088). The ink composition of the invention is typically free (or substantially free) of alkoxysilanes not containing a alkenylsilyl group as described below.

As used herein, a composition "substantially free of" a component means that the component may be present as traces into the composition but is not added as an ingredient or additive. The composition thus comprises 0.01 wt% or less, preferably 0.001 wt% or less, of the component relative to the total weight of the composition.

The ink composition is particularly suitable for marking glass or plastic substrates, in particular glass or plastic bottles, under wet conditions, the marking being able to withstand rubbing and immersion in water and to be removed or erased by dipping in an alkaline solution.

The ink composition for liquid jet printings according to the invention comprises:
(a) a solvent;
(b) a binder comprising one or more polymeric compound(s); and
(c) one or more colorant material(s);
wherein the ink composition further comprises 3% or more, preferably from 3 to 10%, by weight of an alkenylalkoxysilane relative to the total weight of the composition.

The term "polymer" as used herein includes oligomers (number of monomers < 10) and polymers (number of monomers > 10).

The ink composition is typically liquid at ambient temperature and above.

The expression "ambient temperature" is understood generally to mean a temperature from 5 to 30°C, preferably from 10 to 25°C, more preferably from 15 to 24°C and better still from 20 to 23°C. It is clearly understood that the ink is liquid at atmospheric pressure.

The ink composition is particularly suitable for liquid jet printing or marking and particularly for the continuous deflected inkjet printing technique (known as "CIJ") or for the super piezo inkjet printing technique (known as "SPI").

Continuous deflected inkjet printing technique consists in sending ink, under pressure, into a cavity containing a piezoelectric crystal, from where the ink escapes via an orifice (nozzle) in the form of a jet. The piezoelectric crystal, vibrating at a given frequency, causes pressure disturbances in the inkjet, which oscillates and gradually breaks up into spherical droplets. An electrode, placed in the path of the jet, where it breaks up, makes it possible to give these drops an electrostatic charge, if the ink is conductive. The drops thus charged are deflected in an electric field and allow the printing.

"SPI" technique may be defined, for simplification, as a printing technique with a binary "CIJ" deflected continuous jet in which, unlike the printing technique with a deflected continuous jet where the projected printing drops each have a non-zero net electric charge, the drops are not charged with an electric field, each have a zero net electric charge and each forms a dipole under the effect of an electric field, and are then deflected by this field.

By "binary" is meant:
- that there exists a first trajectory of the drops for printing, and a second trajectory of the drops for recycling the ink. In this second trajectory of the drops, the drops are recovered in a gutter where the ink is sucked up, and then recycled towards the ink circuit,
- that a message with a height of N pixels requires a printing head with N nozzles.

It is important to note that, while in the printing technique with a "CIJ" deflected continuous jet, these are deflected drops which are printed, in the so called "SPI" technique these are on the contrary non-deflected drops which are printed.

The "SPI" technique is widely described in the following documents WO-A2-2005/070676 and FR2906755 to which reference is made here explicitly and which are introduced into the present description in their entirety.

The compositions of the present invention comprise an alkenylalkoxysilane, preferably a vinylalkoxysilane.

Alkenylalkoxysilane are known in the art. Alkenylalkoxysilanes comprise a functional group having the following formula: 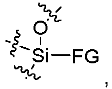 wherein 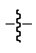 represents a link to the rest of the molecule, and FG represents a group comprising a non-aromatic double-bond directly or indirectly linked (by a covalent bond) to the silicium atom.

Vinylalkoxysilanes are also known in the art. Vinylalkoxysilanes typically comprise a vinylsilyl functional group having the following formula: 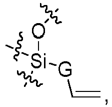 wherein 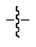 represents a link to the rest of the molecule, and G represents a (single) bond or a linker. Preferably, G does not comprise a -C(O)- group directly linked to the final double bond.

Preferably, the alkenylalkoxysilane or the vinylalkoxysilane does not comprise or is free of (meth)acrylate groups of formula 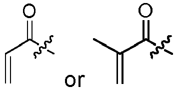 wherein 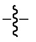 represents a link to the rest of the molecule.

Advantageously, the alkenylalkoxysilane is a compound of formula (I):

(R₁-CH=CR₂-L)ₙ-Si(R₃)ₘ-(OR₄)₄₋ₙ₋ₘ (I)

wherein:
L is a bond or a saturated divalent straight or branched hydrocarbon chain comprising from 1 to 20 carbon atoms, wherein 1 to 6 methylene unit(s) (preferably non-adjacent methylene unit(s)) is(are) optionally replaced by an arylene group, an heteroarylene group, epoxy ( 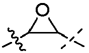 wherein 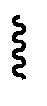 and 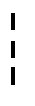 represent different links to the rest of the molecule), -C(O)-, -O-, -S-, -S(O)-, -S(O)2-, =N-, -NRₘ- with Rₘ independently being H or a C₁-C₆-alkyl, or an anhydride (-O-C(O)-O-), preferably 1 to 6 methylene unit(s) (preferably non-adjacent methylene unit(s)) is(are) optionally replaced by an arylene group, an heteroarylene group or -O-,
R₁ is H or a C₁-C₁₀-alkyl,
R₂ is H or a C₁-C₁₀-alkyl,
or R₁-CH=CR₂-forms a C₄-C₁₀-cycloalkenyl,
R₃ is an aryl group or a C₁-C₁₀-alkyl, the C₁-C₁₀-alkyl group being unsubstituted or substituted by one or several substituents, preferably selected from halogen (notably CI), NHR, NHC(O)OR, NHC(O)R, OR, Si(OR)₃ with R independently representing a C₁-C₆-alkyl, an aryl group or a heteroaryl group;
R₄ is independently a C₁-C₁₀-alkyl, preferably a C₁-C₆-alkyl;
n is 1, 2 or 3, preferably 1 or 3, even more preferably 1,
m is 0, 1 or 2, preferably 0 or 1, even more preferably 0
provided that the sum n+m is 1, 2 or 3.

As used herein, a "C₁-C₁₀-alkyl

The term "(C₄-C₁₀)cycloalkenyl

As used herein, an "aryl" group refers to an aromatic hydrocarbon group comprising preferably from 5 to 12, notably from 6 to 10, carbon atoms and comprising one or more fused rings, such as, for example, a phenyl or naphtyl group. Advantageously, the aryl is a phenyl.

The term "heteroaryl" as used herein refers to an aryl group, as defined above, in which one or more, advantageously 1 to 4, and more advantageously 1 or 2, carbon atoms have been replaced by respectively one or more, advantageously 1 to 4, and more advantageously 1 or 2, heteroatom(s), such as a nitrogen, oxygen or sulphur, preferably oxygen or nitrogen. Examples of hetearyl groups include furyl, thienyl, pyrrolyl, pyridyl, oxazolyl, isoxazolyl, thiazolyle, isothiazolyl, imidazolyl, pyrazolyl, oxadiazolyl, thiadiazolyl, triazolyl, tetrazolyl, pyridazinyl, pyrimidinyl, pyrazinyl, triazinyl, quinolyl, isoquinolyl, quinoxalyl, indyl and the like. Advantageously it is a pyridinyl.

As used herein, an "arylene group" refers to a divalent aromatic hydrocarbon group, preferably containing 6 to 10 carbon atoms, and optionally comprising one or more fused rings, such as a phenylene or naphthalene group. Advantageously, the arylene group is phenylene.

As used herein, a "heteroarylene group" refers to a divalent aromatic heterocycle, comprising 5 to 10 ring atoms, including one or more heteroatoms, preferably 1 to 4 and more preferably 1 or 2 heteroatoms, such as sulfur, nitrogen, or oxygen atoms, with the remaining ring atoms being carbon atoms. Examples of heteroarylene groups include pyridylene.

The term "halogen", as used herein, refers to a fluorine, bromine, chlorine or iodine atom, preferably a chlorine atom.

Preferably, L is a bond or a saturated divalent, straight or branched, hydrocarbon chain comprising from 1 to 20 carbon atoms, wherein 1 to 6 (preferably 1 or 2) methylene unit(s) is(are) optionally be replaced by an arylene group, a heteroarylene group or -O-. Even more preferably, L is a bond or a saturated divalent straight or branched hydrocarbon chain comprising from 1 to 20 carbon atoms. In particular embodiments, L is a bond.

Advantageously, R₁ is H or a C₁-C₆-alkyl and/or R₂ is H or a C₁-C₆-alkyl. Preferably R₁ and R₂ are independently H or methyl, even more preferably R₁ is H and R₂ is H or methyl.

Preferably, R₃ is a C₁-C₆-alkyl, unsubstituted or substituted by one or several substituents, preferably selected from halogen (notably CI) and OR with R independently representing a C₁-C₆-alkyl group. Advantageously, is R₃ is a C₁-C₆-alkyl, unsubstituted or substituted by one or several halogen atoms, preferably chlorine atoms.

Preferably, R₃ is a C₁-C₆-alkyl, even more preferably R₃ is a C₁-C₄-alkyl.

Advantageously, in formula (I):
R₃ is a C₁-C₁₀-alkyl and preferably a C₁-C₄-alkyl,
R₄ is independently a C₁-C₁₀-alkyl and preferably a C₁-C₄-alkyl, and
m is 0 or 1, even more preferably 0.

In some embodiments, in formula (I):
L is a bond or a saturated divalent straight or branched hydrocarbon chain comprising from 1 to 10 carbon atoms, wherein 1 to 4 methylene unit(s) (preferably non-adjacent methylene unit(s)) is(are) optionally replaced by an arylene group, a heteroarylene group, or -O-,
R₁ is H or a C₁-C₁₀-alkyl, preferably H,
R₂ is H or a C₁-C₁₀-alkyl, preferably R₂ H or a C₁-C₄-alkyl,
or R₁-CH=CR₂-forms a C₄-C₁₀-cycloalkenyl,
R₃ is a C₁-C₁₀-alkyl, unsubstituted or substituted by one or several substituents, preferably selected from halogen (notably CI) or OR, with R independently representing a C₁-C₆-alkyl,
R₄ is independently a C₁-C₆-alkyl, preferably a C₁-C₄-alkyl,
n is 1, 2 or 3, preferably 1 or 3, even more preferably 1,
m is 0, 1 or 2, preferably 0 or 1, even more preferably 0
provided that the sum n+m is 1, 2 or 3.

In some embodiments, in formula (I):
L is a bond or a saturated divalent straight or branched hydrocarbon chain comprising from 1 to 10 carbon atoms, wherein 1 to 3 methylene unit(s) (preferably non-adjacent methylene unit(s)) is(are) optionally replaced by an arylene group or -O-,
R₁ is H or a C₁-C₁₀-alkyl, preferably H,
R₂ is H or a C₁-C₆-alkyl, preferably R₂ H or a C₁-C₄-alkyl,
R₃ is a C₁-C₆-alkyl, unsubstituted or substituted by one or several substituents, preferably selected from halogen (notably CI),
R₄ is independently a C₁-C₆-alkyl, preferably a C₁-C₄-alkyl,
n is 1, 2 or 3, preferably 1 or 3, even more preferably 1,
m is 0 or 1, preferably 0 or 1, even more preferably 0
provided that the sum n+m is 1, 2 or 3.

Examples of suitable alkenylalkoxysilanes include, but are not limited to, vinyltriethoxysilane, vinyltrimethoxysilane, vinyldimethylethoxysilane, vinylmethyldiethoxysilane, vinylmethyldimethoxysilane, trivinylmethoxysilane, vinyl(chloromethyl)dimethoxysilane, 11-allyloxyundecyltrimethoxysilane, allyltriethoxysilane, allyltrimethoxysilane, allylmethyldimethoxysilane, 3-butenyltriethoxysilane, docosenyltriethoxysilane, vinyltri-t-butoxysilane, 1,1-bis(trimethoxysilylmethyl)ethylene, ((chloromethyl)phenylethyl)methyldimethoxysilane, m-allylphenylpropyltriethoxysilane, (5-bicyclo[2.2.1]hept-2-enyl)triethoxysilane, norbornenyltriethoxysilane, [(5-bicyclo[2.2.1]hept-2-enyl)ethyl]trimethoxysilane, [2-(3-cyclohexenyl)ethyl]triethoxysilane, (5-bicyclo[2.2.1]hept-2-enyl)methyldiethoxysilane, (5-bicyclo[2.2.1]hept-2-enyl)diethoxysilane, (3-cyclopentadienylpropyl)triethoxysilane, styrylethyltrimethoxysilane, and mixtures thereof. Preferably, the alkenylalkoxysilane is vinyltriethoxysilane, vinyltrimethoxysilane, vinyldimethylethoxysilane, vinylmethyldiethoxysilane, vinylmethyldimethoxysilane, or mixtures thereof.

Alkenylalkoxysilanes, and in particular vinylalkoxysilanes, may be prepared by methods commonly known in the art.

The ink composition comprises 3% or more, advantageously from 3 to 10% by weight of a alkenylalkoxysilane relative to the total weight of the composition.

Alkenylalkoxysilanes are known to enhance adhesion of the ink on surfaces, in particular glass or metal surfaces, through covalent bonding with the hydroxyl groups present on glass surface, improving interactions with both the binder and colorant materials. Alkenylalkoxysilanes are also known to be subjected to hydrolysis reactions in the presence of water.

Without wishing to be bound by theory, it is believed that the high content of alkenylalkoxysilane in the ink compositions allow maintaining good ink properties, such as adhesion on the surfaces and viscosity, while working under conditions where the water or moisture content is not controlled. The ink compositions are thus more stable under humid conditions, and over time. Indeed, when the content of alkenylalkoxysilane, in particular vinylalkoxysilane, is below 3 wt%, adhesion on glass is lost over time, leading to ink leaching. An alkenylalkoxysilane of 3 wt% or more is thus necessary to stabilize the adhesion properties of the ink composition within the targeted lifetime of an ink formulation, especially under humid conditions.

The ink compositions may thus contain 0.5 wt% or more of water and/or 0.5 wt% or more of alcohols, relative to the total weight of the ink composition.

The ink composition preferably comprises from 3 to 10%, more preferably from 3 to 9%, advantageously from 3 to 8%, even more preferably from 3 to 7.5%, of alkenylalkoxysilane (or a mixture of alkenylalkoxysilanes), by weight relative to the total weight of the ink composition.

The ink composition comprises a binder comprising one or more polymeric compound(s).

A binder (or resin) is generally, mostly, one or more solid polymeric compound(s) and their choice depends on their solubility in the selected solvents, their compatibility with the dyes and the other additives, their ability to give the right electrostatic charge to the drops, and also depending on the properties that they confer on the ink film once it is dried. Their primary function is to provide adherence for the ink on a maximum number of supports or on special supports, for example non-porous supports. They also confer appropriate viscosity to the ink for the formation of drops from the jet and they provide the marking obtained with most of its properties of resistance to physical and/or chemical aggression such as resistance to friction and more generally to abrasion.

The binder typically represents from 0.1 to 50% by weight, preferably from 1 to 45% by weight, still preferably from 3 to 30% by weight, better from 5 to 20% by weight, of the total weight of the ink composition.

The binder may comprise one or more other binder resin (s) generally chosen from resins that are soluble in the solvent of the ink composition such as resins that are soluble in organic solvents, such as ketone solvents. Examples of suitable binder resins include for instance polyacrylates, polymethacrylates, polystyrenes and copolymers thereof, epoxy resins, epoxy phenolic resins, melamines, rosin derivatives, poly(vinylchloride), poly(vinylacetate), copolymers of vinyl monomers, polyurethane resins, phenol formaldehyde resins, and cellulosic polymers and derivatives thereof.

Advantageously, the binder comprises or consists of a mixture of a binder resins adapted to obtain a balanced compromise between properties including film-forming ability, adhesion and washability properties (and/or solubility in basic solutions).

In some embodiments, the binder is free or substantially free of hydroxyaromatic resin, in particular hydroxyaromatic resins as disclosed in WO2010/103088.

The solvent of the ink composition according to the invention generally represents from 30 to 90% by weight, preferably from 60 to 90% by weight, of the total weight of the ink composition. The solvent is typically an organic solvent. The solvent may comprise a majority weight proportion, based on the total weight of the solvent (50% by weight of the total weight of the solvent or more, or even up to 100% by weight of the total weight of the solvent), of one or several volatile organic solvent compound(s), and optionally a minority weight proportion, based on the total weight of the solvent, of one or several non-volatile organic solvent compound(s).

The solvent of the ink composition preferably consists of one or several volatile organic solvent compound(s).

By « volatile organic solvent compound » is generally meant that this compound has a speed of evaporation, evaporation rate, of more than 0.5 (preferably of more than 1.5, more preferably of more than 2) on the scale in which n-butyl acetate has a speed of evaporation equal to 1. In other words (see below), this organic solvent compound has a volatility index according to NF T30-301 standard of more than 0.5, preferably of more than 1.5, more preferably of more than 2.

The solvent may be chosen from alcohols, ketones and/or esters.

The solvent is typically chosen from ketones, preferably from aliphatic ketones having 3 to 10 carbon atoms, such as acetone, butanone (methyl ethyl ketone), 2-pentanone (methyl propyl ketone), 3-methyl-2-butanone(methyl isopropyl ketone) and 4-methyl-2-pentanone(methyl isobutyl ketone) , and cyclic ketones such as cyclohexanone; and mixtures thereof.

The solvent is preferably constituted by one or more ketone (s) preferably chosen from acetone, butanone (methyl ethyl ketone), 2-pentanone (methyl propyl ketone), 3-methyl-2-butanone (methyl isopropyl ketone) and 4-methyl-2-pentanone (methyl isobutyl ketone). One solvent that is preferred above all consists of methyl ethyl ketone (MEK).

One or more organic solvent (s) other than those mentioned above, such as ketones, may be added in a minority proportion by weight relative to the total weight of the solvent, in order to optimize the properties of the inks. These minority solvents may be chosen from esters and ethers of ethylene glycol or of propylene glycol and acetals.

The skilled person will be able to select a suitable solvent based on the intended use of the ink composition ("CIJ" or "SPI" printing technique). In particular, the skilled person will know that ink compositions for "CIJ" printing technique do not comprise solvent having a dielectric constant of less than 15.

The ink composition is generally a non-aqueous composition, which generally means that the ink composition comprises a very low proportion of water. Thus, the ink composition generally comprises less than 0.5% by weight, preferably less than 0.1 % by weight, even more preferably less than 0.05% by weight of water relative to the total weight of the ink composition. In some embodiments, the ink compositions may comprise from 1 to 5% by weight of water relative to the total weight of the ink composition.

In order to be coloured or opaque, the ink composition comprises colorant materials, i.e. one or more dye(s) and/or pigment(s). "Dyes" refer to colorant materials that are soluble in the solvent used. "Pigments" refer to colorant materials that are insoluble in the solvent used.

The dye(s) and/or pigment (s) may be chosen from all the dyes or pigments suitable for the intended use that are known to a person skilled in the art.

The pigments, which are by nature insoluble, are therefore dispersed and may be opaque or non-opaque. They give the ink its colour, its opacity, or specific optical properties, such as fluorescence (see patents or patent applications US-A-4 153 593, US-A-4 756 758, US-A-4 880 465, EP-A-O 289 141, US-A-5 395 432, GB-A-2 298 713). In certain cases, the dyes themselves also give the ink sufficient conductivity for it not to be necessary to add a conductivity salt. The dyes known under the name C.I. Solvent Black 27, 29, 35 and 45 are included in this case.

The dye(s) may be selected from among the dyes known under the name of "C.I. Solvent Dyes". The pigment(s) may be selected from organic and mineral pigments, notably from pigments known under the name of "C.I. Pigments", and from solid particles not referenced in the "Colour Index" (C.I.) such as particles of metals or alloys or mixtures of metals such as particles of copper and/or silver, particles of metal oxides, particles of ceramics, particles of refractory mineral compounds, and particles of any other mineral compound, preferably said pigment(s) is (are) selected from titanium oxide and carbon black.

As examples of the most common pigments and dyes may be cited C.I. Solvent Black 3, 7, 27, 28, 29, 35, 48, 49, C.I. Solvent Blue 38, 44, 45, 70, 79, 98, 100, 129, C.I. Solvent Red 8, 49, 68, 89, 124, 160, 164, C.I. Solvent Yellow 83 :1, 126, 146, 162, C.I. Solvent Green 5, C.I. Solvent Orange 97, C.I. Solvent Brown 20, 52, C.I. Solvent Violet 9, dispersions of Pigment Blue 15 :1,15 :3, 60, of Pigment Green 7, of Pigment Black 7, of Pigment Red 48 :2, 144, 146 149, 166, 185, 202, 208, 214, 254, of Pigment Violet 19, 23, of Pigment Yellow 17, 83, 93, 139, 151, 155, 180, 191, of Pigment Brown 23, 25, 41, or of Pigment White 6.

The dyes and pigments will generally be chosen from the dyes and pigments known under the name of "C.I. Solvent Dyes" and "C.I. Pigments". As examples of the most common pigments and dyes, mention may be made of C.I. Solvent Black 29, C.I. Solvent Black 7, C.I. Solvent Black 28, C.I. Solvent Black 35, C.I. Solvent Blue 70, C.I. Solvent Red 124, dispersions of Pigment Blue 60 or of Pigment Blue 15.

Preferred dyes are C.I. Solvent Black 27 and C.I. Solvent Black 29.

Preferred pigments are Pigment White 6, Pigment Black 7, Pigment Blue 60, Pigment Red 202 and Pigment Green 7.

Preferably, a dye or pigment for which the water solubility is the lowest, which is insoluble in water and which is insoluble in mixtures of water and of at least one alcohol, will be chosen. The expression "water-insoluble dye or pigment" is generally understood to mean a dye or pigment of which the soluble fraction is inferior to 0.1% by weight in demineralized water.

The expression "dye insoluble in mixtures of water and of at least one alcohol" is generally understood to mean a dye or pigment of which, the soluble fraction is inferior to 0.1% by weight in said mixture.

The total amount of dye(s) and/or of pigment (s) is generally from 0.05 to 25% by weight, preferably from 1 to 20%, more preferably from 3 to 10% by weight of the total weight of the ink composition. Preferably, the colourant material is a dye, in particular a dye that is suitable for indirect food contact, and that is not toxic to the environment.

The ink composition may, in addition, comprise one or more plasticizer (s) (of the resin (s) or polymer (s) of the binder) chosen, for example, from the plasticizers that are known to a person skilled in the art and chosen as a function of the binder used comprising one or more polymer (s) and/or resin (s). Mention may be made, for example, as a plasticizer, of thermoplastic polyurethanes, phthalates, adipates, esters such as citrates like trialkyl citrates, for example tributyl citrate, alkyl phosphates, glycerol, lactic acid, oleic acid, polypropylene glycol, triglycerides of fatty acids, levulinic acid; carbamates or carbamic resins; and mixtures thereof. By "thermoplastic polyurethanes" are meant polyurethanes from the polycondensation of polyalcohols and of polyisocyanates.

The plasticizer (s) is (are) generally present in an amount of at least 0.05%, preferably from 0.1 to 15% by weight of the total weight of the ink composition.

The ink composition may, in addition, optionally comprise at least one conductivity salt.

Since the products that provide the ink with the necessary conductivity for continuous jet spraying are ionisable compounds, such as salts, it is possible that the dyes, already present in the ink, give sufficient conductivity to the latter for there to be no need to add an actual conductivity salt: this is the case for the compounds known under the name "C.!. Solvent Black 27, 29, 35 and 45", already cited. Inks applied by a deflected continuous ink jet must have sufficient electrical conductivity, generally greater than or equal to 5 µS/cm at 20°C, preferably greater than or equal to 300 µS/cm at 20°C, even more preferably greater than or equal to 500 µS/cm at 20°C.

The electric conductivity is measured with a commercial instrument and according to the principle well-known to the man skilled in the art, for example described on the site: http://fr.wikipedia.org/wiki/Conductim%C3%A9trie.

The electric conductivity may be measured according to the following standard: ASTM D1125 - 14: Standard Test Methods for Electrical Conductivity and Resistivity of Water. The electric conductivity may be measured for example with a commercially available conductimeter of the Radiomete^{®}Company.

However, it will often be necessary to include, in the ink composition, a conductivity salt other than the dyes and which is generally chosen from the salts of alkali metals (such as lithium, sodium, potassium salts), the salts of alkaline-earth metals (such as magnesium and calcium salts) and the salts of single or quaternary ammoniums, said salts being in the form of halides (chlorides, bromides, iodides, fluorides), perchlorates, nitrates, thiocyanates, tetrafluoroborates, formates, acetates, sulphates, propionates, hexafluorophosphates, hexafluoroantimonates, etc. When the markings obtained with this composition have to be water resistant, these salts will be chosen from those which are insoluble in water (in other words, in general, for which the solubility in water is less than 0.5% by weight), such as fatty chain quaternary ammoniums and hexafluorophosphates or antimonates.

These conductivity salts will therefore be present, if necessary, in the ink composition so as to impart conductivity to the ink: preferably their amount is from 0.1 to 20% by weight, more preferably from 0.1 to 10% by weight and better still from 0.1 to 5% by weight relative to the weight of the ink composition. In some embodiments, the molar ratio conductivity salts (in particular salts of quaternary ammoniums) /dye is superior or equal to 1.

The ink composition can optionally include one or more tackifiers. In general, a tackifier can improve adhesion between the ink composition and a substrate (e.g., a cardboard, a glass, a metal, or a film). Examples of tackifiers include glycerol esters, pentaerythritol esters, hydrocarbons, rosin, rosin esters, modified rosin esters (e.g., hydrogenated, acid, or phenolic-modified rosin esters), cumarone-indene polymers, cyclic ketone polymers, styrene allyl alcohol polymers, polystyrenes, polyvinyl toluene/methylstyrene polymers, polyvinyl chloride, polyvinyl alcohol, ethylene/vinyl acetate, ethylene/acrylic acid, alkyl hydrocarbon polymers, aryl hydrocarbon polymers, alkyl aryl hydrocarbon polymers, terpene polymers, ethylene carbon monoxide copolymers, vinyl chloride/vinyl alcohol copolymers, polyvinyl butyral, polyketones, styrene/acrylic copolymers, polybutenes, polybutadienes, styrene- isoprene-styrene, styrenebutadiene- styrene, polyvinyl pyrrolidone, polyvinyl pyridine, vinyl pyrrolidone/vinyl acetate, polyurethanes, polyesters, polyamides, cellulose esters, cellulose ethers, polyols, styrene-acrylates, polypropylene, chlorinated polypropylene, chlorinated paraffin, gilsonite and other asphaltic materials, cyclic hydrocarbon polymer, halogenated polymers, acrylics, epoxides, novolacs, and other synthetic and natural resins. A commercially available tackifier is polyterpene available from Goodyear under the trade name Wingtack 86. In some embodiments, the tackifier comprises hydroxyl or carboxylic acid group and has a high acid number, whereby "high acid number" is defined as a range of 100-300 mg KOH/g sample, more preferably 150-250 mg KOH/g sample. In some embodiments, the ink composition contains at least about 1 wt% (e.g., at least about 5 wt%, at least about 10 wt%, or at least about 15 wt%) and/or at most about 25 wt% (e.g., at most about 20 wt%, at most about 15 wt%, at most about 10 wt%, or at most about 5 wt%) of the tackifier.

The ink composition may, in addition, comprise one or more additives chosen from compounds which improve the solubility of some of its components, the print quality, the adhesion, or else the control of the wetting of the ink on various supports.

The additive (s) could be chosen, for example, from anti-foaming agents; chemical stabilizers; UV stabilizers; surfactants, such as Fluorad^{®} FC 430 or Byk^{®} 333; agents that inhibit salt corrosion; bactericides, fungicides and biocides; and pH control buffers, etc.

The additive (s) is (are) used in very low doses, in general less than or equal to 5% and sometimes as low as 0.01%, depending on whether they are anti-foaming agents, stabilizers or surfactants.

Advantageously, the ink composition is free of, or substantially free of, fluoropolymers, in particular free of hydroxy-functional fluoropolymers, such as described for instance in WO2013/158360.

Ink compositions according to the invention may be prepared by mixing the components described herein above.

For all ink jet printing techniques and technologies, including the binary continuous deviated, deflected, liquid jet printing technique with uncharged drops called the "SPI" technique, the viscosity of inks at the ink projection temperature is very low, typically from 1 to 10 cPs (mPa.s), or to 15 cPs, or to 20 cPs.

The viscosity of the ink jet ink composition according to the invention is generally from 1 to 20 cPs (mPa.s), preferably from 1 to 15 cPs (mPa.s), more preferably from 3 to 6 cPs (mPa.s) at 20°C for CIJ printing and more preferably from 7 to 9 cPs (mPa.s) at 20°C for SPI printing.

The viscosity may be measured according to the following standard: DIN 53019 -1: Measurements of viscosities and flow curves by means of rotational viscometers.

The present invention also relates to a process for marking substrates, supports or objects, in particular made of glass, comprising the step of spraying an ink composition as described herein onto the substrates, supports or objects. The marking may be made by the continuous deflected technique or the super piezo inkjet printing technique.

The supports, substrates and objects may be of all types, especially the supports, substrates and objects may be made of mineral oxides, of glass, of ceramic, of metal, of plastics, or combination thereof, preferably made of glass.

The substrates, supports or objects may be a container, in particular a glass container, more preferably a glass bottle.

### METHODS

Sample preparation : tests are performed on manually deposited drops using a 5µl capillary tubes on flat microscope glass slides.

Alternatively, inks are printed under the form of checkered squares on soda lime glass slides that are beforehand washed in a caustic bath and rinsed with both tap and demineralized water.

Ink washability : to assess the removability of the print, a caustic bath of 2wt% NaOH in demineralized water at 65°C is prepared. Samples are immersed for up to 10min, rinsed with water, and a visual inspection is performed. If all dots are removed but ghost traces, i.e. remnant slight translucent grey traces, remain visible, the test is passed. The test is considered as excellent if the glass is fully washed and no mark remains visible.

Rub resistance test : once samples are prepared, they are left at room temperature for 24h. Samples are then exposed to rubbing using a Scrub Abrasion and Washability Tester (AB6000) equipped with a modified crockmeter and an ISO standard cotton cloth. After 20, 40 and 60 rub cycles, being the number of back and forth performed by the apparatus, a visual assessment is performed. The test is considered as passed if the dots are still clearly visible after 40 rub cycles and considered as excellent if the dots are still clearly visible at 60 rub cycles.

Test conditions : Specific conditions can be applied on samples before performing the rubbing test.
- Dry conditions : standard conditions where the samples are not subjected to any other conditions variation.
- Wet conditions : A water layer is sprayed prior the rubbing test to reproduce water condensates.

Water immersion test: Samples are immersed for 24h in a demineralized water bath at room temperature. After these 24h, the amount of dots detached during immersion is counted, then the samples are manually rubbed for 10 rub cycles. The test is considered as passed if 90% of dots remains at the end of the test and excellent if 100% of dots remains. If the dots hold in the water bath but do not resist to the rub test, it is denoted "Hold", if not it is labelled as "Do Not Hold".

Ink stability : it is determined through accelerated aging by storing the ink at 50°C in a controlled temperature oven for up to 12 weeks with regular assessment of the performances at room temperature. Viscosity, water immersion and rub resistance performances in various test conditions are compared to initial performances.

Viscosity variation is followed to assess formulation stability over time and is measured using a Kinexus PRO+ with a cup and bob geometry C25 DIN standard.

Embodiments of the present invention will now be described by way of the following examples which are provided for illustrative purposes only, and not intended to limit the scope of the disclosure.

### EXAMPLES

The impact of the nature and content of different alkoxysilanes was first tested.

The formulations are described in Table 1. The "base 1" represents the base formulation with the main resin being a Styrene-Acrylic copolymer mixture dissolved in Methyl ethyl ketone (MEK). The formulations comprise a surfactant and a black dye (Solvent Black 27). In comparative formulation 1 (Form. 1), N-(2-aminoethyl)-N'-[3-(trimethoxysilyl)propyl]ethylenediamine is used as reference aminoalkoxysilane. In formulations 2, 3 and 4 (Form. 2, 3 and 4, respectively), different amounts of vinyltriethoxysilane (Lunasil^{®} VTEO) are added as the alkenylalkoxysilane.

**Table 1.**

| **Type** | **Grade** | **Wt%** | | | | |
|---|---|---|---|---|---|---|
| | | **Base 1** | **Form. 1** | **Form. 2** | **Form. 3** | **Form. 4** |
| **Resin** | Styrene-Acrylic copolymer 1 | 8 | - | 8 | 8 | 8 |
| **Resin** | Styrene-Acrylic copolymer 2 | - | 14.6 | - | - | - |
| **Tackifier** | Hydrogenated Rosin | 16 | | 16 | 16 | 16 |
| **Aminoalkoxysilane** | N-(2-aminoethyl)-N'-[3-(trimethoxysilyl)propyl]ethyle nediamine | - | 1.5 | - | - | - |
| **Vinylalkoxysilane** | Vinyltriethoxysilane | - | - | 1 | 3 | 5 |
| **Dye** | Solvent Black 27 | 5 | 4.9 | 5 | 5 | 5 |
| **Surfactant** | Polyether siloxane copolymer | 0.1 | - | 0.1 | 0.1 | 0.1 |
| **Catalyst** | Acetic Acid >99.7wt% | - | 2.5 | - | - | - |
| **Solvent** | MEK | 70.9 | 76.5 | 69.9 | 67.9 | 65.9 |

Initial performances, *i.e.* during the first days after formulation and before accelerated aging, are described in Table 2. Tests were performed on manual deposits. Rub resistance tests (dry and wet), washability tests and water immersion tests show good performances for all formulations with the exception of the base 1 formulation which failed in the water immersion test. The tests on formulations 1, 2, 3 and 4 show that the nature of the alkoxysilane and its concentration are both important to guarantee good adhesion over time. In the stability test at 50°C, comparative formulation 1 leads to the formation of aggregates and sedimenting. Such depositions would favour clogging in the printing nozzles, which is not acceptable for the targeted applications of the ink compositions. In contrast, the inventive formulations 3 and 4 were stable over time.

**Table 2.**

| **Test** | **Base** | **Form. 1** | **Form. 2** | **Form. 3** | **Form. 4** |
|---|---|---|---|---|---|
| **Dry rub res.** | Pass | Pass | Pass | Pass | Pass |
| **Wet rub res.** | Pass | Pass | Pass | Pass | Pass |
| **Washability** | Pass | Pass | Pass | Pass | Pass |
| **Water Immersion** | Do not hold | Pass | Pass | Pass | Pass |
| **Ink stability** | Pass | Fail | - | Pass | Pass |

Table 3 shows the viscosity and water immersion resistance evolution of formulations 3 and 4 when aged at 50°C. Both formulations remained stable, with slight variations which can be explained by solvent evaporation over time due to a bottle leak. This clearly shows the advantage of using an alkenylalkoxysilane as an alternative to usual alkoxysilanes such as N-(2-aminoethyl)-N'-[3-(trimethoxysilyl)propyl]ethylenediamine in the formulation as it provides equivalent if not better performances without impairing the stability during accelerated aging.

**Table 3. Stability assessment, in term of viscosity and water immersion (W.I.) resistance evolution during aging at 50°C.**

| **Week at 50°C** | **Form. 3** | | **Form. 4** | |
|---|---|---|---|---|
| | **Visc. [mPa s]** | **W.I.** | **Visc. [mPa s]** | **W.I.** |
| **0** | 4 | Pass | 4.1 | Pass |
| **4** | 4.15 | Pass | 4.3 | Pass |
| **8** | 4.15 | Pass | 4.2 | Pass |
| **12** | 4.1 | Pass | 3.9 | Pass |

Further tests were performed on the formulations described in table 4. The "base 2" represents the base formulation with the binder resin dissolved in Methyl ethyl ketone (MEK). The formulations comprise a surfactant and a black dye (Solvent Black 27). In comparative formulation 5 (Form. 5), 3-Mercaptopropyltrimethoxysilane is used as a reference mercaptoalkoxysilane. In formulations 6, 7 and 8 (Form. 6, 7, and 8, respectively), different amounts of vinyltriethoxysilane (Lunasil^{®} VTEO) are added as the alkenylalkoxysilane.

**Table 4.**

| **Type** | **Grade** | **Wt%** | | | | |
|---|---|---|---|---|---|---|
| | | **Base 2** | **Form. 5** | **Form. 6** | **Form. 7** | **Form. 8** |
| **Binder Resin** | Mixture of binder resins | 8 | 8 | 8 | 8 | 8 |
| **Comparative Alkoxysilane** | 3-Mercaptopropyltrimethoxysil ane (Dynasylan^{®} MTMO) | - | 1.8 | - | - | - |
| **Alkenylalkoxy silane** | Vinyltriethoxysilane (Lunasil VTEO) | - | - | 1.8 | 5 | 10 |
| **Dye** | Solvent Black 27 | 5 | 5 | 5 | 5 | 5 |
| **Surfactant** | Polyether siloxane copolymer | 0.1 | 0.1 | 0.1 | 0.1 | 0.1 |
| **Solvent** | MEK | 86.9 | 85.1 | 85.1 | 81.9 | 76.9 |

Table 5 shows the results in various performance tests. Performance tests are performed on formulations 5 to 8 and base 2 following the same protocols as described above in connection with formulations 1-4 and base 1.

**Table 5. Formulations 5 to 8 and base 2 performances in terms of dry and wet rub resistance test, washability in caustic bath and water immersion rub resistance.**

| **Test** | **Base 2** | **Form. 5** | **Form. 6** | **Form. 7** | **Form. 8** |
|---|---|---|---|---|---|
| **Dry rub res.** | Pass | Pass | Pass | Pass | Pass |
| **Wet rub res.** | Fail | Pass | Pass | Pass | Pass |
| **Washability** | Pass | Pass | Pass | Pass | Pass |
| **Water Immersion** | Do not hold | Pass | Pass | Pass | Pass |
| **Ink stability** | Pass | Fail | Fail | Pass | Pass |

Table 6 below shows the viscosity and water immersion resistance evolution of formulations 5 and 8 when aged at 50°C. These results show that the comparative formulations 5 (with the mercaptoalkoxysilane) and 6 (with a content of alkenylalkoxysilane of less than 3 wt%) are not stable after 3 to 5 weeks at 50°C, while the inventive formulations 7 and 8 are stable for a period of at least 8 weeks at 50°C. This clearly shows that the use of an alkenylalkoxysilane in high concentrations is beneficial for ink compositions.

**Table 6. Stability assessment, in term of viscosity and water immersion resistance evolution during aging at 50°C.**

| **Week at 50°C** | **Form. 5** | **Form. 6** | | **Form. 7** | | **Form. 8** | |
|---|---|---|---|---|---|---|---|
| | **Visc. [mPas]** | **Visc. [mPas]** | **Water immersio n** | **Visc. [mPas]** | **Water immersio n** | **Visc. [mPas]** | **Water immersio n** |
| **0** | 4.5 | 5 | Pass | 4.3 | Pass | 4.4 | Pass |
| **2** | 7.4 | 5.2 | Do not resist | - | - | - | - |
| **3** | 11.3 Stop | 5.3 | Do not resist | 4.5 | Pass | 4.7 | Pass |
| **5** | - | 5.0 | Fail - Stop | - | - | - | - |
| 6 | - | - | | 4.5 | Pass | 4.8 | Pass |
| 8 | - | - | | 4.7 | Pass | 4.9 | Pass |

## Claims

1. An ink composition for liquid jet printing comprising:
(a) a solvent;
(b) a binder comprising one or more polymeric compound(s); and
(c) one or more colorant material(s);
wherein the ink composition further comprises 3% or more, preferably from 3 to 10% by weight of an alkenylalkoxysilane relative to the total weight of the composition.

2. The ink composition of claim 1, wherein the alkenylalkoxysilane is a compound of formula (I):
(R₁-CH=CR₂-L)ₙ-Si(R₃)ₘ-(OR₄)₄₋ₙ₋ₘ (I)
wherein:
L is a bond or a saturated divalent straight or branched hydrocarbon chain comprising 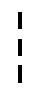 from 1 to 20 carbon atoms, wherein 1 to 6 methylene unit(s) is(are) optionally replaced by an arylene group, an heteroarylene group, epoxy ( 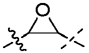 wherein 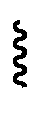 and
represent different links to the rest of the molecule), -C(O)-, -O-, -S-, -S(O)-, -S(O)2-, =N-, -NRₘ- with Rₘ independently being H or a C₁-C₆-alkyl, or anhydride (-O-C(O)-O-),
R₁ is H or a C₁-C₁₀-alkyl,
R₂ is H or a C₁-C₁₀-alkyl,
or R₁-CH=CR₂-forms a C₄-C₁₀-cycloalkenyl,
R₃ is an aryl group or a C₁-C₁₀-alkyl, the C₁-C₁₀-alkyl group being unsubstituted or substituted by one or several substituents, preferably selected from halogen (notably CI), NHR, NHC(O)OR, NHC(O)R, OR, Si(OR)₃ with R independently representing a C₁-C₆-alkyl, an aryl group or a heteroaryl group;
R₄ is independently a C₁-C₁₀-alkyl, preferably a C₁-C₆-alkyl;
n is 1, 2 or 3, preferably 1 or 3, even more preferably 1,
m is 0, 1 or 2, preferably 0 or 1, even more preferably 0
provided that the sum n+m is 1, 2 or 3.

3. The ink of claim 2, wherein, in formula (I), L is a saturated divalent straight or branched hydrocarbon chain comprising from 1 to 20 carbon atoms, wherein 1 to 6 methylene unit(s) is(are) optionally be replaced by an arylene group, an heteroarylene group or -O-.

4. The ink of claim 2, wherein, in formula (I), L is a bond.

5. The ink of any of claims 2 to 4, wherein, in formula (I), R₁ and R₂ are independently H or methyl, preferably R₁ is H and R₂ is H or methyl.

6. The ink of any of claims 2 to 5, wherein, in formula (I), R₃ is a C₁-C₆-alkyl, unsubstituted or substituted by one or several substituents, preferably selected from halogen (notably CI) and OR with R independently representing a C₁-C₆-alkyl group.

7. The ink of any of claims 2 to 6, wherein in formula (I) :
R₃ is a C₁-C₁₀-alkyl;
R₄ is independently a C₁-C₁₀-alkyl;
m is 0 or 1, preferably 0.

8. The ink composition of any one of claims 1 to 7, wherein the alkenylalkoxysilane is selected from the group consisting of vinyltriethoxysilane, vinyltrimethoxysilane, vinyldimethylethoxysilane, vinylmethyldiethoxysilane, vinylmethyldimethoxysilane, trivinylmethoxysilane, vinyl(chloromethyl)dimethoxysilane, 11-allyloxyundecyltrimethoxysilane, allyltriethoxysilane, allyltrimethoxysilane, allylmethyldimethoxysilane, 3-butenyltriethoxysilane, docosenyltriethoxysilane, vinyltri-t-butoxysilane, 1,1-bis(trimethoxysilylmethyl)ethylene, ((chloromethyl)phenylethyl)methyldimethoxysilane, m-allylphenylpropyltriethoxysilane, (5-bicyclo[2.2.1]hept-2-enyl)triethoxysilane, norbornenyltriethoxysilane, [(5-bicyclo[2.2.1]hept-2-enyl)ethyl]trimethoxysilane, [2-(3-cyclohexenyl)ethyl]triethoxysilane, (5-bicyclo[2.2.1]hept-2-enyl)methyldiethoxysilane, (5-bicyclo[2.2.1]hept-2-enyl)diethoxysilane, (3-cyclopentadienylpropyl)triethoxysilane, styrylethyltrimethoxysilane, and mixtures thereof, preferably the alkenylalkoxysilane is vinyltriethoxysilane, vinyltrimethoxysilane, vinyldimethylethoxysilane, vinylmethyldiethoxysilane, vinylmethyldimethoxysilane, and mixtures thereof.

9. The ink composition of any one of claims 1 to 8, wherein the ink composition comprises from 3 to 7.5% of an alkenylalkoxysilane, by weight relative to the total weight of the composition.

10. The ink composition of any one of claims 1 to 9, wherein the solvent is selected from the group consisting of alcohols, ketones, esters and mixtures thereof, preferably the solvent is methyl ethyl ketone (MEK).

11. Use of an alkenylalkoxysilane, preferably as defined in any of claims 2 to 8, in an ink composition for liquid jet printings, in particular for continuous deflected ink jet ("CIJ") printing technique, to improve the balance between water immersion resistance of printed ink on a glass surface and stability of the ink composition over time.

12. A process for preparing an ink composition according to any one of claims 1 to 10 comprising the steps of mixing (a) a solvent, (b) a binder comprising one or more polymeric compound(s); and (c) one or more colorant material(s), the solvent, binder and colorant material(s) being as recited in any one of claims 1 to 10.

13. A process for marking a support, substrate or object by liquid printing technique, in particular by continuous deflected ink jet printing technique, the process comprising the step of spraying an ink composition onto the support, substrate or object, wherein the ink composition is as defined in any one of claims 1 to 10.

14. The process according to claim 13 wherein the support, substrate or object is made of glass, of ceramic, of metal, of plastics, or combination thereof.

15. The process according to claim 13 or 14 wherein the support, substrate or object is a glass container, preferably a glass bottle.
